# EUROPÄISCHE PATENTSCHRIFT

(11) **EP 2 333 421 B1**
(45) Veröffentlichungstag und Bekanntmachung des Hinweises auf die Patenterteilung: **18.10.2017**
(21) Anmeldenummer: 10193037.8
(22) Anmeldetag: 30.11.2010
(51) Int. Cl.: F24C 7/08, B29C 45/16

(54) **Anzeigeflächenelement für ein Hausgerät**
Display surface element for a domestic appliance
Elément plat d'affichage pour un appareil ménager

(30) Priorität: 10.12.2009 DE 102009054529
(43) Veröffentlichungstag der Anmeldung: 15.06.2011
(73) Patentinhaber: BSH Hausgeräte GmbH, 81739 München (DE)
(72) Erfinder: Fleissner, Reinhard, 83352, Altenmarkt a.d. Alz (DE); Huber, Ernst, 83308, Trostberg (DE)

(56) Entgegenhaltungen:
- EP-A1- 1 283 105
- EP-A1- 1 724 088
- DE-A1- 4 301 444
- DE-A1- 19 610 687
- DE-A1-102004 040 998
- DE-A1-102005 024 934
- DE-U1-202006 006 612
- JP-A- 7 137 086
- JP-A- 7 276 428

## Beschreibung

Die Erfindung bezieht sich auf ein Anzeigeflächenelement für ein Hausgerät insbesondere für einen Backofen, bestehend aus einer einstückigen Platte, die transparente und opake Plattenbereiche aufweist.

Bei Backöfen werden Anzeigeflächenelemente verwendet, deren Frontseite eine plane Platte aus Glas oder aus glasartigem Material aufweist, die einen dunklen, meist schwarzen, durch eine sehr dünne Emaill- oder Epoxydbedruckung geschaffenen opaken Hintergrund aufweist, der ausgesparte transparente und z. B. hinterleuchtete Plattenbereiche in Form von Durchsichtfenstern für die Darstellung von Elektronikanzeigen, Uhren, Kennzeichen für Betriebsarten, Leuchtsymbolen oder dergleichen aufweist. Die Herstellung derartiger Anzeigeplatten ist relativ aufwendig und kostenintensiv, da die Bedruckung der Plattenrückseite meist mehrmalige Druckvorgänge und Trocknungsprozesse erfordert und die sehr dünne Bedruckungsschicht durch Kratzer oder starken Abrieb leicht beschädigt werden kann, was dann zu unerwünschten transparenten Stellen führt.

Der vorliegenden Erfindung ist die Aufgabe gestellt, ein Anzeigeflächenelement der eingangs genannten Art zu verbessern.

Diese Aufgabe wird durch die Merkmale des Anspruchs 1 gelöst. Das erfindungsgemäße Anzeigenflächenelement besteht optimaler Weise aus zwei ohne zusätzliches Verbindungsmittel mittels Wärmenergie, vorzugsweise im Spritzgussverfahren molekular miteinander verbundenen Schichten aus jeweils homogenen Material-Komponenten, deren Herstellung unter Einwirkung von Wärme in einem Arbeitsgang mit unmittelbar aufeinanderfolgenden, im Beispiel zwei Fertigungsschritten erfolgt. Im Gegensatz zu bekannten Druckverfahren haben die Schichten eine Dicke im Millimeterbereich von z. B. mindestens 0,5 Millimeter, so dass während der Herstellung des Hausgeräts oder durch Benutzung desselben entstehender Abrieb oder Kratzer an der opaken z. B. schwarzen Schicht keine wahrnehmbare Beeinträchtigung der Opazität bewirken können.

Zur Vermeidung von während der Herstellung der Anzeigeflächenelemente mittels thermischen Verfahrensschritten und während der ebenfalls unterschiedlichen thermischen Einflüsse bei der Benutzung des Hausgeräts die vorbestimmte Form der Anzeigeflächenelemente verändernden thermisch bedingten mechanischen Spannungen in Folge unterschiedlichen Ausdehnungsverhaltens der Material-Komponenten ist erfindungsgemäß vorgesehen, dass die Material-Komponenten gleiche thermische Ausdehnungseigenschaften besitzen.

Gemäß der Erfindung weist zumindest eine der Schichten konstruktive Elemente z. B. für deren Verbindung mit dem Hausgerät auf. Aufgrund der homogenen und in einem Arbeitsgang erzeugten Schichten ist es möglich, zumindest eine der Schichten einstückig mit konstruktiven Elementen z. B. mit angeformten Laschen, Ösen oder dergleichen für die Verbindung mit Bestandteilen des Hausgeräts oder zu anderen Zwecken zu versehen, im Gegensatz zu konventionell bedruckten, vorgefertigten transparenten Glasplatten, zu deren Verbindung mit dem Hausgerät zusätzliche Verbindungselemente erforderlich sind.

In ähnlicher Weise eröffnet die Erfindung insbesondere bei Benutzung von mehr als zwei Schichten die Möglichkeit, ohne zusätzlichen Verfahrensschritt bzw. Arbeitsgang in vorteilhafter Weise vorzusehen, dass zwischen bzw. in den Schichten Anzeigeelemente, Symbole und/oder andere in die Schichten zusätzlich eingebrachte Elemente angeordnet sind.

Die Erfindung ist anhand eines Ausführungsbeispieles in der Zeichnung nachstehend erläutert.

Es zeigt:
- Figur 1: die Schnittansicht eines Teils eines erfindungsgemäßen Anzeigeflächenelements,
- Figur 2: eine perspektivische Darstellung des Anzeigeflächenelements gemäß Figur 1 in Explosionsdarstellung.

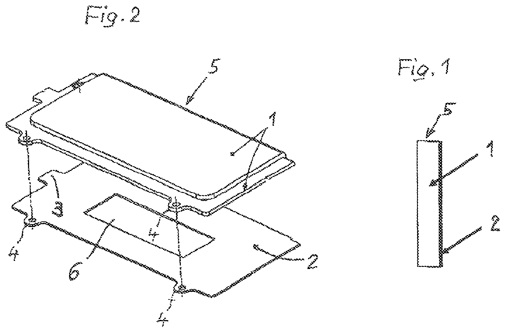

Der Querschnitt durch ein einstückiges Anzeigeflächenelement gemäß Figur 1 zeigt eine äußere, voll transparente und ununterbrochene Schicht 1 mit einer Dicke von z. B. 3,2 mm und damit innig verbunden eine bzgl. der Frontblende z. B. eines Backofens innere opake, d. h. nicht-transparente Schicht 2 mit einer Dicke von z. B. 0,8 mm, also beide Dicken im Millimeterbereich. Beide Schichten 1, 2 bestehen aus einem spritzgussfähigen Kunststoffmaterial z. B. PMMA, d. h. aus homogenen Material-Komponenten, wobei die innere Material-Komponente 2 z. B. homogen schwarz eingefärbt ist und die äußere Material-Komponente 1 transparente, d. h. lichtdurchlässige Eigenschaften besitzt.

In Figur 2 ist gezeigt, dass die genannten Schichten 1, 2 unterschiedliche Abmessung und Ausgestaltung haben können. So ist die Schicht 2 einstückig und mit dickerem Mittelbereich mit laschenartigen oder in Form von Ösen ausgebildeten Elementen 3, 4 z. B. für die Befestigung des Anzeigeflächenelements 5 an der Frontseite eines Hausgeräts versehen. In Figur 2 ist diese Schicht 2 explosionsartig von der Schicht 1 in der Figur nach unten abgehoben dargestellt und verdeutlicht, dass die opake Schicht 2 transparente z. B. hinterleuchtete Bereiche 6 z. B. in Form eines Durchsichtfensters für elektronische Anzeigeelemente aufweist.

Die innige Verbindung der beiden Schichten 1, 2 erfolgt in einem Arbeitsgang und im Spritzgussverfahren, indem nach dem spritzgusstechnischen Formen der Material-Komponente für die Schicht 2 die zweite Schicht 1 in einem unmittelbar, insbesondere kontinuierlich hierauf durchgeführten zweiten, ebenfalls spritzgusstechnischen Fertigungsschritt ausgeformt und innig mit der erstgenannten Schicht 2 verbunden wird im Sinne eines Zweikomponenten-Spritzgussverfahrens.

## Patentansprüche

1. Anzeigeflächenelement (5) für ein Hausgerät insbesondere für einen Backofen, bestehend aus einer einstückigen Platte (5), die transparente und opake Plattenbereiche aufweist, wobei die Platte aus mindestens zwei miteinander innig verbundenen Schichten (1, 2) gebildet ist, von denen mindestens eine äußere, ununterbrochene Schicht (1) voll transparent ist und eine zweite innere Schicht (2) zumindest teilweise opake Bereiche aufweist, und sowohl die äußere Schicht (1) als auch die innere Schicht (2) aus einem spritzgußfähigen Kunststoffmaterial ausgebildet sind, **dadurch gekennzeichnet, dass** jede Schicht (1, 2) eine Dicke von mindestens 0,5 mm aufweist und die innere Schicht (2) mit einem dickeren Mittelbereich und mit laschenartig oder in Form von Ösen ausgebildeten Elementen (3,4) z.B. für deren Verbindung mit dem Hausgerät versehen ist.

2. Anzeigeflächenelement (5) nach Anspruch 1,
**dadurch gekennzeichnet, dass** die beiden Schichten (1, 2) aus PMMA ausgebildet sind.

3. Anzeigeflächenelement (5) nach einem der vorhergehenden Ansprüche,
**dadurch gekennzeichnet, dass** die innere Schicht (2) aus einer homogen schwarz eingefärbten Material-Komponente ausgebildet ist.

4. Anzeigeflächenelement (5) nach einem der vorhergehenden Ansprüche,
**dadurch gekennzeichnet, dass** die laschenartig oder in Form von Ösen ausgebildeten Elemente (3, 4)für die Befestigung des Anzeigeflächenelements (5) an der Frontseite des Hausgeräts ausgebildet sind.

5. Anzeigeflächenelement (5) nach einem der vorhergehenden Ansprüche,
**dadurch gekennzeichnet, dass** die innere Schicht (2) transparente, insbesondere hinterleuchtete, Bereiche (6) in Form eines Durchsichtfensters für elektronische Anzeigeelemente aufweist.

6. Backofen mit einem Anzeigeflächenelement (5) nach einem der vorhergehenden Ansprüche, **dadurch gekennzeichnet, dass** die äußere Schicht (1) und die innere Schicht (2) innere und äußere Schicht (1, 2) bezüglich einer Frontblende des Backofens sind.

7. Verfahren zur Herstellung des Anzeigeflächenelements nach einem der Ansprüche 1 bis 5, **dadurch gekennzeichnet, dass** die Schichten (1, 2) in insbesondere kontinuierlich aufeinanderfolgenden Spritzgussverfahren miteinander verbunden werden.

## Claims

1. Display surface element (5) for a domestic appliance, in particular for a baking oven, consisting of an integral plate (5), which has transparent and opaque plate regions, wherein the plate is formed from at least two layers (1, 2) closely connected to one another, of which at least one outer, uninterrupted layer (1) is fully transparent and a second inner layer (2) has at least partially opaque regions, and both the outer layer (1) and the inner layer (2) are embodied from an plastic material which is capable of being injection moulded, **characterised in that** each layer (1, 2) has a thickness of at least 0.5 mm and the inner layer (2) is provided with a thicker centre region and with lug-like elements (3, 4), or elements (3, 4) embodied in the form of eyelets, e.g. for the connection thereof to the domestic appliance.

2. Display surface element (5) according to claim 1,
**characterised in that** the two layers (1, 2) are embodied from PMMA.

3. Display surface element (5) according to one of the preceding claims,
**characterised in that** the inner layer (2) is embodied from a material component which has a homogenous black colour.

4. Display surface element (5) according to one of the preceding claims,
**characterised in that** the lug-like elements (3, 4), or the elements (3, 4) embodied in the form of eyelets, are embodied for the fastening of the display surface element (5) on the front side of the domestic appliance.

5. Display surface element (5) according to one of the preceding claims,
**characterised in that** the inner layer (2) has transparent, in particular back-lit regions (6) in the form of a viewing window for electronic display elements.

6. Baking oven with a display surface element (5) according to one of the preceding claims, **characterised in that** the outer layer (1) and the inner layer (2) are the inner and outer layer (1, 2) in relation to a front panel of the baking oven.

7. Method for producing the display surface element according to one of claims 1 to 5, **characterised in that** the layers (1, 2) are connected to one another in particular by continuously successive injection moulding methods.

## Revendications

1. Élément plan d'affichage (5) pour un appareil ménager, en particulier pour un four, composé d'une plaque en un seul morceau (5), laquelle présente des zones de plaque transparentes et des zones de plaque opaques, dans lequel la plaque est constituée par au moins deux couches intimement liées (1, 2), dont au moins une couche extérieure ininterrompue (1) est intégralement transparente et une deuxième couche intérieure (2) présente au moins en partie des zones opaques, et tant la couche extérieure (1) que la couche intérieure (2) sont constituées en un matériau plastique moulable par injection, **caractérisé en ce que** chaque couche(1, 2) présente une épaisseur minimale de 0,5 mm et la couche intérieure (2) est dotée d'une zone centrale plus épaisse et d'éléments exécutés sous la forme de brides ou d'oeillets (3, 4), p.ex. afin de les relier à l'appareil ménager.

2. Élément plan d'affichage (5) selon la revendication 1, **caractérisé en ce que** les deux couches (1, 2) sont exécutées en PMMA.

3. Élément plan d'affichage (5) selon l'une des revendications précédentes, **caractérisé en ce que** la couche intérieure (2) est exécutée en un composant de matériau coloré en noir de façon homogène.

4. Élément plan d'affichage (5) selon l'une des revendications précédentes, **caractérisé en ce que** les éléments exécutés sous la forme de brides ou d'oeillets (3, 4) sont exécutés pour la fixation de l'élément plan d'affichage (5) au côté frontal de l'appareil ménager.

5. Élément plan d'affichage (5) selon l'une des revendications précédentes, **caractérisé en ce que** la couche intérieure (2) présente des zones (6) transparentes, en particulier rétroéclairées, sous la forme d'une fenêtre transparente pour les éléments d'affichage électroniques.

6. Four avec un élément plan d'affichage (5) selon l'une des revendications précédentes, **caractérisé en ce que** la couche extérieure (1) et la couche intérieure (2) sont la couche intérieure et extérieure (1, 2) par rapport à un panneau avant du four.

7. Procédé de fabrication de l'élément plan d'affichage selon l'une des revendications 1 à 5, **caractérisé en ce que** les couches (1, 2) sont reliées l'une à l'autre selon un procédé de moulage par injection en particulier successif en continu.
